# EUROPEAN PATENT APPLICATION

(11) **EP 2 680 595 A1**
(43) Date of publication of application: **01.01.2014**
(21) Application number: 12173491.7
(22) Date of filing: 25.06.2012
(51) Int. Cl.: H04N 21/236

(54) **Apparatus and method thereof for multiplexing transport streams to a transport stream**

(71) Applicant: ITE Tech. Inc, Hsinchu (TW)
(72) Inventor: Wang, Chien-Fa, 112 Taipei City (TW)
(74) Representative: Wittmann, Günther

(57) **Abstract**

In this invention, a method for multiplexing multiple transport streams into a single output transport stream and an apparatus thereof are disclosed. With such method, two or more transport streams are merged into a single transport stream without dividing the payload of each packet into multiple packets in the output transport stream. One way to achieve the merging of transport streams is by mapping the PID and the source port of a packet to a new tag to replace the PID of each packet so as to uniquely identify the packet in the output transport stream. By doing so, multiple transport streams can be merged into an output transport stream efficiently and transparently.

## Description

### BACKGROUND OF THE INVENTION

### 1. Field of the invention

The invention relates in general to a transport stream to deliver video and sound information, and more particular to apparatus and method thereof for multiplexing transport streams.

### 2. Description of the Prior Art

Using digital format to transmit video or audio information has become more and more popular around the world because it will enhance the quality of video and allows two-way interactive communication compared with traditional analog format. A transport stream (TS) is a popular standard to carry programs of video/audio; a number of the video/audio programs can be delivered by a transport stream in which a PID is assigned to each program so that each program can be uniquely identified. The DVB standard is a new and widely used standard for broadcasting video and/or audio data using transport streams. In a transport stream (TS), there are two types of format for framing each packet in a transport stream. One is the 188-byte format and the other is the 204-byte format; the 204-byte format has a 16-byte suffix to carry Reed-Solomon code (RS code) for error correction. In each packet, there is a 4-byte header which includes a synchronous byte (sync-byte) predefined as 0x47, and a packet identifier (PID) to identify the program to which the packet belongs.

When combining multiple transport streams coming from different sources into a single transport stream, it requires a mechanism to distinguish PIDs between different sources; otherwise an error may occur if there is an identical PID in packets from different sources.

In a prior art, US 8,155,151, a method for solving this problem is disclosed. Please refer to Fig. 1 which depicts the prior art. A multiplexing system receives a first transport stream from a first source and a second transport stream from a second source. The payload of a packet coming from the two sources is divided into a front portion and an ending portion; and the ending portion of the payload is re-packetized to form a new packet which has a new 4-bytes header to indicate which source the packet comes from. The original packets and the new packets from two sources are combined into an output transport stream. Then, at the receiving end of the output transport stream, the output transport stream will be processed to derive the packets as it was received by the above-mentioned multiplexing system. By using the method described in the prior art, US 8,155,151, the efficiency of carrying the payload by a packet is reduced significantly and the error rate will be increased due to the complexity of the re-packetizing. Therefore, what is needed is an efficient way for multiplexing transport streams into an output transport stream to solve the above issues.

### SUMMARY OF THE INVENTION

One objective of the present invention is to merge transport streams from multiple ports into an output transport stream transparently without dividing the payload of a packet into multiple packets to preserve the precious bandwidth of a transport stream. Therefore, the efficiency can be greatly enhanced by using present invention to merge multiple transport streams into an output transport stream.

One embodiment discloses a method to merge multiple transport streams from multiple ports into an output transport stream by mapping the PID and the source port of the packet to a new tag to replace the PID of each packet so as to uniquely identify the packet in the output transport stream.

One embodiment discloses a method to merge multiple transport streams from multiple ports into an output transport stream by mapping the source port of the packet to a new tag for each packet, so that the new tag along with the PID of the packet will uniquely identify the packet in the output transport stream.

One embodiment discloses an apparatus, called multiple transport stream multiplexer, for merging transport stream from multiple ports into an output transport stream by mapping a PID and a source port of a packet to a new tag, so that the new tag will uniquely identify the packet in the output transport stream.

One embodiment discloses another apparatus to cascade multiple transport stream multiplexers mentioned above to scale up the number of ports to increase the capacity for merging transport streams.

### BRIEF DESCRIPTION OF THE DRAWINGS

The foregoing aspects and many of the accompanying advantages of this invention will become more readily appreciated as the same becomes better understood by reference to the following detailed description, when taken in conjunction with the accompanying drawings, wherein:

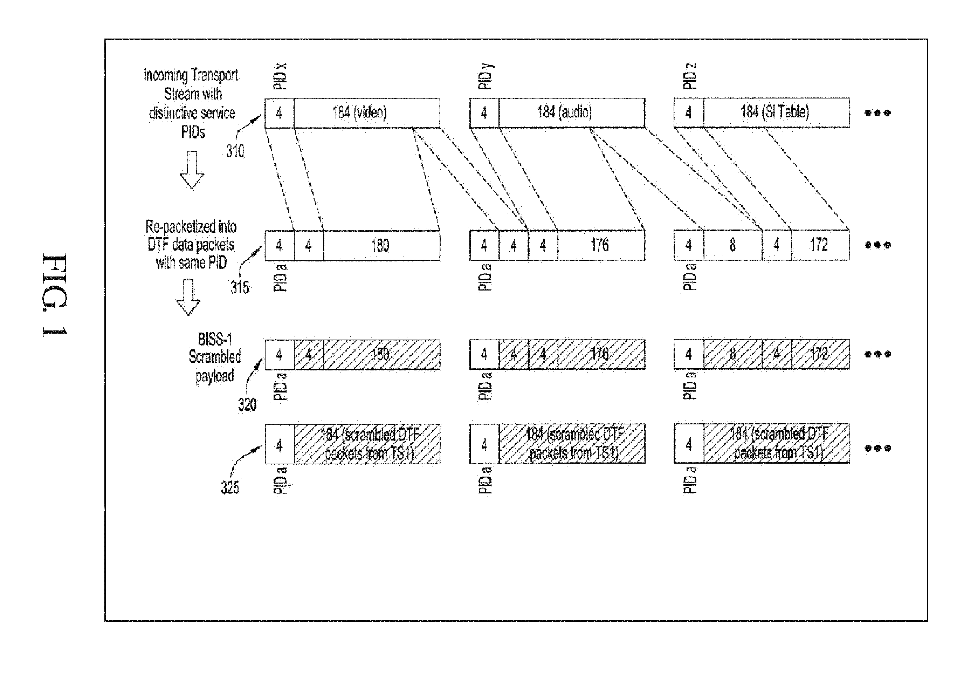

Fig. 1 illustrates an embodiment in a prior art;
Fig. 2 illustrates a flow chart of a method to merge multiple transport streams in accordance with one embodiment of this invention;
Fig. 3 illustrates an aggregator for merging multiple transport streams in accordance with one embodiment of this invention;
Fig. 4A to 4D illustrate methods for stamping a tag in a packet in accordance with one embodiment of this invention;
Fig. 5A and 5B illustrate a method for stamping a tag by modifying the PID in a packet in accordance with one embodiment of this invention;
Fig. 6A to 6C illustrate methods for modifying PIDs in a packet in accordance with one embodiment of this invention;
Fig. 7 illustrates an apparatus to cascade multiple aggregators in accordance with one embodiment of this invention.

### Detailed Description of the Preferred Embodiments

The detailed explanation of the present invention is described as follows. The described preferred embodiments are presented for purposes of illustrations and description, and they are not intended to limit the scope of the present invention.

In this invention, a method for multiplexing a plurality of transport streams (TS) is disclosed. Compared with the prior art, the method in this invention doesn't divide the payload of a transport stream into multiple segments. With this method, a system is capable of multiplexing the plurality of transport streams easier.

### A first embodiment: assigning a tag according to the port identifier

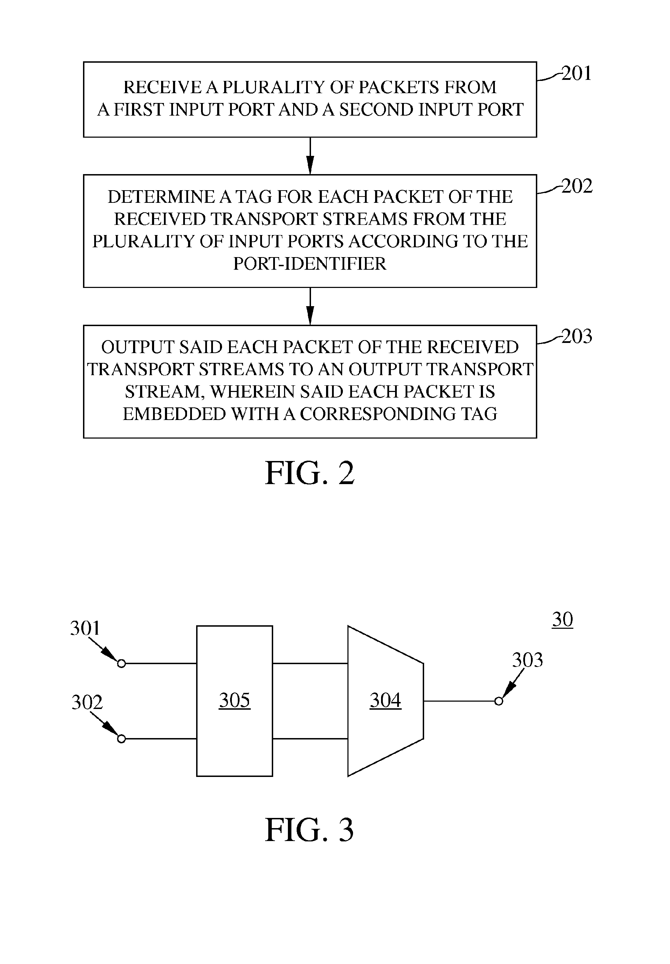

In one embodiment of this invention, please refer to Fig. 2 which illustrates a flow chart of a preferred embodiment of this invention. First, a plurality of packets are received from multiple ports. Some of the packets are received from a first port and others are received from a second port, as in step 201. Then, a tag for each packet of the received transport streams from the plurality of input ports is determined according to the port-identifier, for uniquely identifying the packet in the output transport stream, as in step 202. Then, said each packet of the received transport streams is output to the output transport stream, wherein said each packet is embedded with a corresponding tag, as in step 203.

In one embodiment, please refer to Fig. 3 which illustrates an aggregator implementing the method of this invention. An aggregator 30 comprises a first input port 301, a second input port 302, an output port 303, a multiplexer 304 and a stamp tag module 305. A first transport stream is received via the first input port 301, and a second transport stream is received via the second input port 302. Each of the first and the second transport streams comprises multiple packets. The stamp tag module 305 is to generate a tag and assign the tag to a packet, wherein the tag is determined according to which input port the packet comes from, so a system receiving the packet is capable of identifying which port the packet comes from. The multiplexer 304 is to put the packet, with the assigned tag, in a sequence to form an output transport stream. The output port 303 is to transfer the output transport stream.

### Method of stamping a tag to the sync-byte

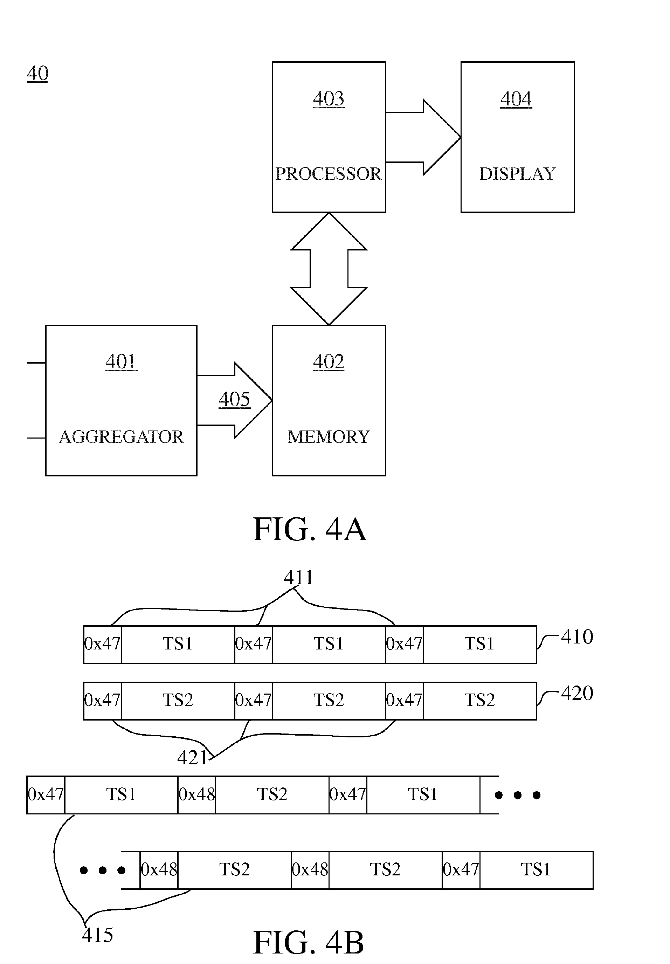

While implementing the method mentioned above, there are a variety of ways to stamp a tag to a packet. In one embodiment, please refer to Fig. 4A which illustrates a variant of this invention. A system 40 comprises an aggregator 401, a memory 402, a processor 403 and a display module 404. The structure and function of the aggregator 401 is depicted in Fig. 3 and described above. The memory 402 is to store a transport stream 405 generated by the aggregator 401. The processor 403 is to transfer the transport stream 405, stored in the memory 402, to a video and play the video on the display 404. Conventionally, a sync-byte 0x47 in a packet of a transport stream is an indicating pointer to inform a system that the packet starts. Any other data bytes, say 0x48, can also be used as a sync-byte if the processor 403 in the system 40 knows what other values the sync-byte could be, besides 0x47, Hence, while the aggregator 401 assigns a tag to a packet in the transport stream, the tag can be directly recorded in the sync-byte.

As an example, please refer to Fig. 4B which illustrates how the aggregator assigns tags. There are two transport streams received by the aggregator 401. A first transport stream (TS1) 410 and a second transport stream (TS2) 420 come from different sources. The aggregator puts each packet in the first transport stream 410 and the second transport stream 420 in a sequence to form the transport stream 405 in which the sync-byte of each packet is re-assigned. The sync-byte 411 of each packet from the first transport stream 410 remains 0x47 while the sync-byte 421 of each packet from the second transport stream 420 is modified as 0x48. Then, each packet of both transport stream 410 and 420 is put in a sequence 415 to form the transport stream 405 mentioned in Fig. 4A. Although the method mentioned here only relates to modifying the sync-byte, a person having ordinary skill in the art can easily utilize the method to any other byte which will not affect the operation of DVB standard.

While a user of the system 40 selects to play a video broadcasted with the first transport stream 410, the processor 403 processes each packet of the transport stream 405 and selects those packets with 0x47 as their sync-byte. While the user of the system 40 selects to play a video broadcasted with the second transport stream 420, the processor 403 processes each packet of the transport stream 405 and selects those packets with 0x48 as their sync-byte.

### Method of stamping a tag with additional byte

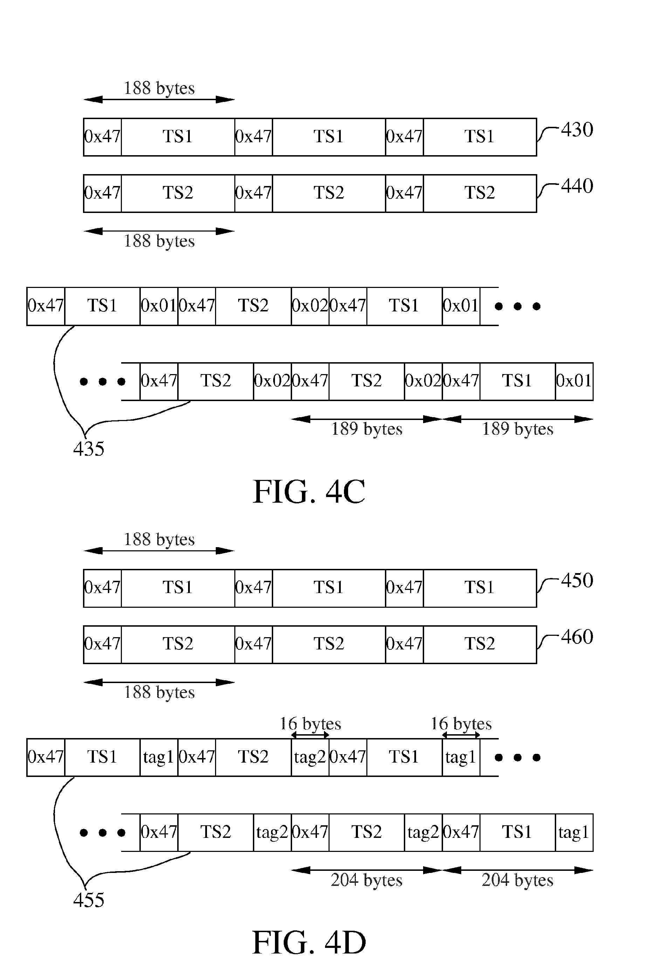

In one embodiment, a processor 403 in Fig. 4A is capable of processing transport streams which are not 188- or 204-byte long as in DVB standard. That is, the aggregator 401 is capable of adding an indicating byte to a packet in the transport stream 405 to tell the processor 403 where the packet comes from. For instance, please refer to Fig. 4C which illustrates another method for stamping a tag. A first transport stream 430 and a second transport stream 440 come from different sources and they are both 188-byte long. The aggregator puts each packet in the first transport stream 430 and the second transport stream 440 in a sequence 435 to form the transport stream 405 in which each packet is added with an indicating byte so that the total length of each packet in the transport stream 405 will be 189 bytes. The indicating byte of each packet from the first transport stream 430 is 0x01; and the indicating byte of each packet from the second transport stream 440 is 0x02. Although the method described above only relates to the 188-byte transport stream standard, a person having ordinary skill in the art can easily utilize the method for the 204-byte transport stream standard.

While a user of the system 40 chooses to play a channel of video carried in a first transport stream 430, the processor 403 will process each packet of the transport stream 405 and select those packets with 0x01 as their indicating byte. While the user of the system 40 chooses to play a channel of video carried in a second transport stream 440, the processor 403 processes each packet of the transport stream 405 and selects those packets with 0x02 as their indicating byte.

### Method of stamping a tag in the RS code field

It is known that the DVB standard provides two types of formats for framing a transport stream. One is a 188-byte format and the other is a 204-byte format. The 204-byte format, compared with the 188-byte format, further comprises a 16-byte field for Reed-Solomon code for detecting errors in a packet. However, it's not always necessary to utilize the RS code, so it provides an extra space for storing an indicator for the purpose of combining multiple transport streams into an output transport stream. In one embodiment, please refer to Fig. 4D which illustrates another method for stamping a tag. A first transport stream 450 and a second transport stream 460 come in from different sources and they both carry packets in the 188-byte format. The aggregator puts each packet in the first transport stream 450 and the second transport stream 460 in a sequence 455 so as to form the transport stream 405, wherein each packet now has 204 bytes; and the information indicating the source of each packet, that is, tag1 or tag2, is now recorded in the last 16 bytes. That is, each packet in the transport stream 405 has a first tag in its last 16 bytes for those packets coming from the first transport stream 450 while each packet coming from the second transport stream 460 has a second tag in its last 16 bytes.

If a user of the system 40 chooses to play a channel of video carried in a transport stream 450, the processor 403 will process each packet of the transport stream 405 and select those packets with a first tag corresponding to the transport stream 450. At the same time, if the user of the system 40 decides to play another channel of video carried in a second transport stream 460, the processor 403 will process each packet of the transport stream 405 and select those packets with the second tag corresponding to the transport stream 460.

### A second embodiment: assigning a tag according to port number and PID

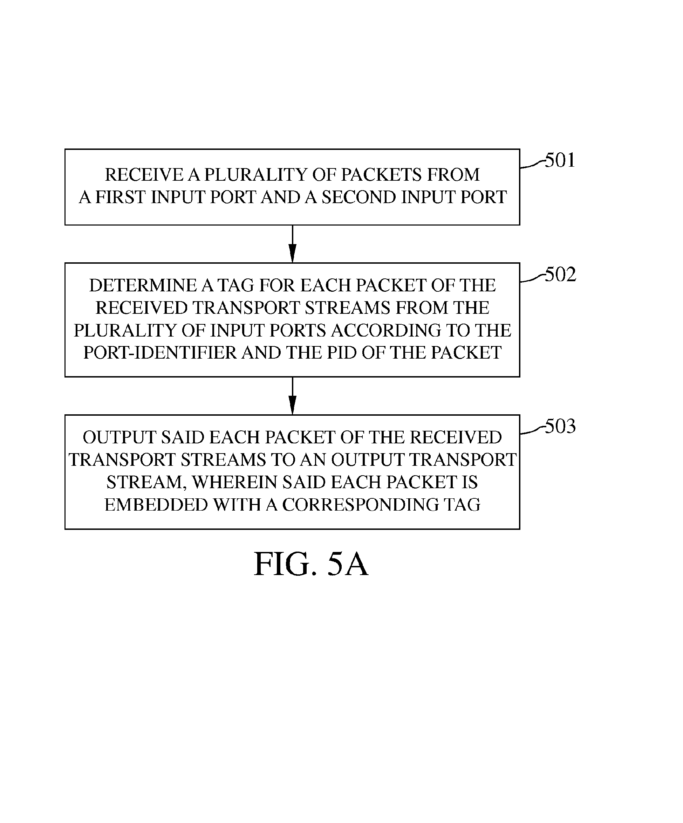

In one embodiment of this invention, please refer to Fig. 5A which illustrates a flow chart of a preferred embodiment of this invention. First, a plurality of packets are received from multiple ports. Some of the packets are received from a first port and others are received from a second port, as in step 501. Then, a tag for each packet of the received transport streams from the plurality of input ports is determined according to the port-identifier and the PID of the packet, for uniquely identifying the packet in the output transport stream, as in step 502. Then, said each packet of the received transport streams is outputted to an output transport stream, wherein said each packet is embedded with a corresponding tag, as in step 503.

In this embodiment, please refer back to Fig. 3 which illustrates an aggregator implementing the method of this invention. A first transport stream is received via the first input port 301, and a second transport stream is received via the second input port 302. Each of the first and the second transport streams comprises multiple packets and each packet comprises a PID. The stamp tag module 305 is to generate a tag and assign the tag to a packet, wherein the tag is determined according to which input port the packet comes from and the PID of the packet, so a system receiving the packet is capable of identifying which port the packet comes from. The multiplexer 304 is to put the packet, with the assigned tag, in a sequence to form an output transport stream. The output port 303 is to transfer the output transport stream.

### Method of stamping a tag by modifying the PID

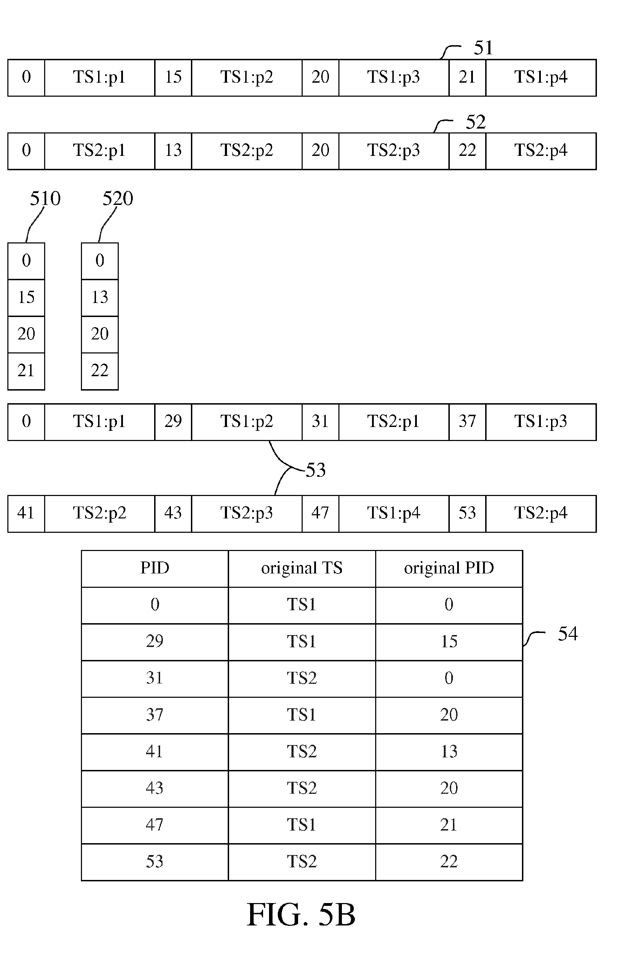

In one embodiment, please refer to Fig. 5B which illustrates a method of stamping a tag by modifying the PID. A first transport stream 51 and a second transport stream 52 come from different sources and have a first PID list 510 and a second PID list 520, respectively. The first PID list 510 and the second PID list 520 have some identical PIDs. The aggregator 30 in Fig. 3 combines packets in the first transport stream 51 and the second transport stream 52 together to form a third transport stream 53. Each packet in the third transport stream 53 is assigned a new PID to avoid PID confliction. Also, a mapping 54 between a new PID and the original PID is recorded in some additional packets in the third transport stream 53.

### Method of modifying PID

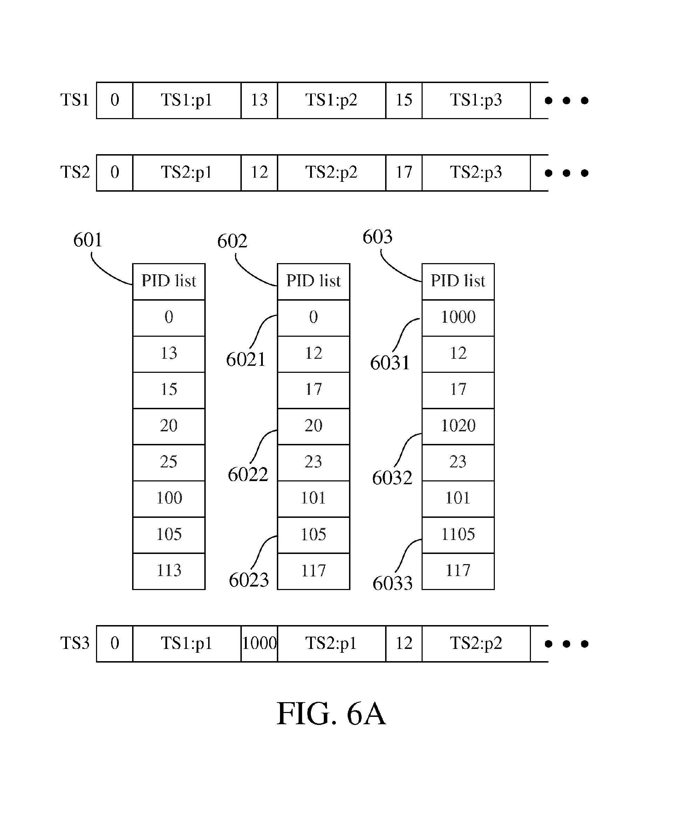

There are several methods to realize stamping a tag by modifying PID. In one embodiment, please refer to Fig. 6A; there are two input transport streams, namely TS1 and TS2. Each packet in TS 1 and TS2 has a PID therein. PIDs in TS1 form a first PID list 601 and PIDs in TS2 form a second PID list 602. Some PIDs such as 6021, 6022, and 6023 in 602 are also found in 601, so the PIDs 6021, 6022, and 6023 should be modified to avoid PID conflicts for merging to a single transport stream. One way to avoid the conflicts is to modify 6021, 6022, and 6023 as 6031, 6032, and 6033 while maintaining other PIDs unchanged. By doing so, a third PID list 603 is generated. Each packet in TS2 is re-assigned with a PID according to the third PID list 603. After that, each packet in TS1 and TS2 is put together to form a third transport stream TS3 for outputting. Also, PID list 603 is embedded into one or more packets in the third transport stream TS3.

### Assign PIDs by a mapping table

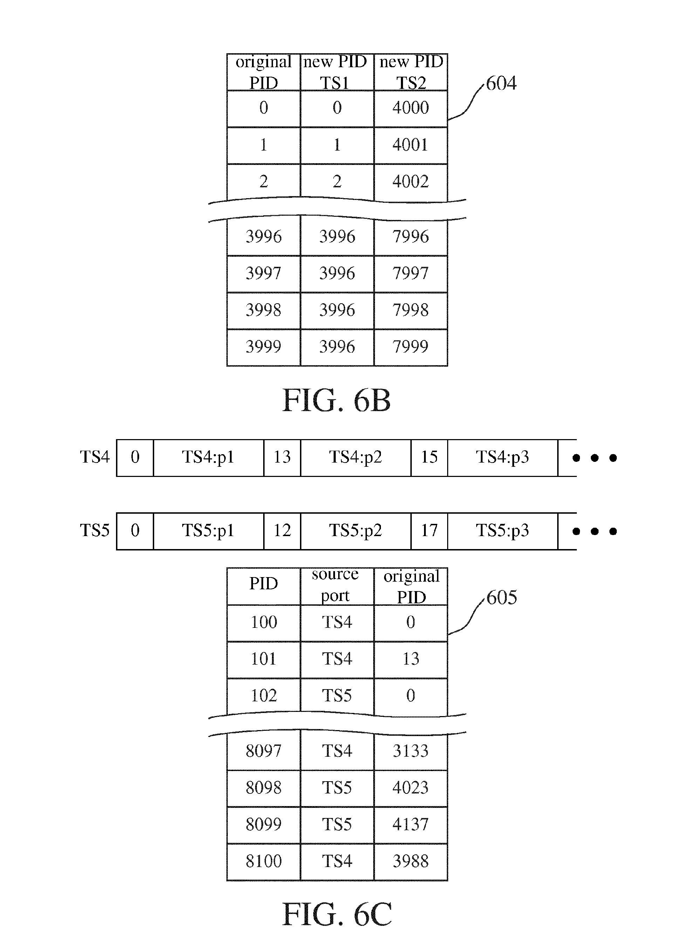

In one embodiment, please refer to Fig. 6B, a mapping table 604 is pre-arranged for mapping PIDs from multiple input ports into a set of PIDs in an output transport stream for uniquely identifying each packet in the output transport stream. That is, the mapping table maps the original PID and the source port-number to a new PID for each packet, wherein the new tag represents the PID of each packet transmitted in the output transport stream. Please note that the new tag may not be equal to the original PID for a packet if there is a conflict with another packet having an identical PID. On the other hand, the new tag may be equal to the original PID if there is no conflict with PIDs in other packets or the original PID remains the same because the original PID is assigned first in the mapping table before any other conflicting PIDs.

### Assign PIDs dynamically

In another embodiment, please refer to Fig. 6C; there are two transport streams, namely TS4 and TS5. While an aggregator receives a packet in TS4 or TS5 for the first time carrying such PID, the aggregator assigns a new tag which represents a PID of the packet in the output transport stream because the packet is received first time and there is no mapping found in the mapping table. Please note that the new tag can be assigned sequentially in a range of PIDs, such as 100 to 8100, to ensure there is no conflicting PID in the output stream for all the packets. Once, a new tag is dynamically assigned to a packet, the tag is to be used for other packets having the same port-number and PID as the packet, which means the other packets will have an existing mapping for them already when they are received, there is no need to generate another tag for them.

A table 605 is used to record a mapping from the PID and source port of a packet to a new tag whenever the new tag is assigned to the packet which is received first time with such PID, Although in this invention only two methods of re-assigning PID are disclosed, there are a variety of similar methods and a person having ordinary skill in the art can easily implement an aggregator with such flexibility according to the concept above.

### Apparatus of cascading aggregators

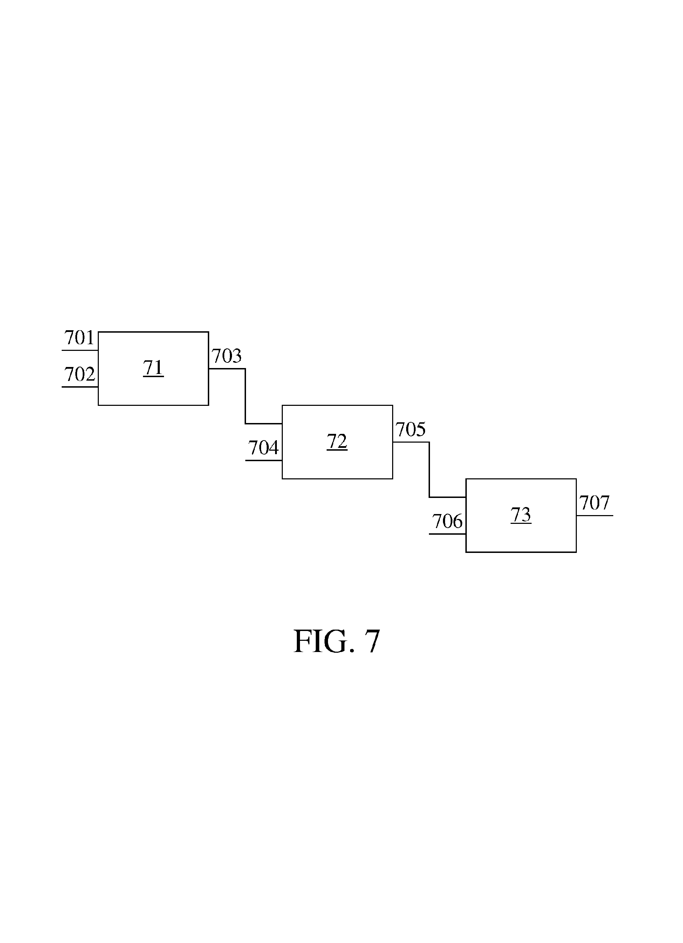

In one embodiment, as depicted in Fig. 7, there are three aggregators mentioned in Fig. 3 in cascade. A first aggregator 71 receives a first transport stream 701 and a second transport stream 702 to output a third transport stream 703 which com combines packets in 701 and 702. A second aggregator 72 receives a fourth transport stream 704 and the third transport stream 703 outputted from the first aggregator 71 to output a fifth transport stream 705 which combines packets in 703 and 704. A third aggregator 73 receives a sixth transport stream 706 and the fifth transport stream 705 outputted from the second aggregator 72 to output a seventh transport stream 707 which combines packets in 705 and 706. While a processor receives the seventh transport stream 707, the processor can easily recovers transport streams 701, 702, 704, and 706.

Although in this invention only an aggregator with two input ports is disclosed, an aggregator may have more than two input ports. That is, the aggregator is capable of receiving more than two transport streams.

In summary, in this invention a method for multiplexing multiple transport streams into a single transport stream and an apparatus thereof are disclosed. The present invention can map PIDs from multiple ports into an output transport stream transparently without dividing the payload of a packet into multiple packets. Furthermore, a mapping table is provided to map the PID and a source port of the packet to a new tag which can replace the PID when the packet is sent to the output transport stream without using any precious bandwidth to carry the payload of the packet. Therefore, the efficiency can be greatly enhanced by using present invention to merge multiple transport streams into an output transport stream.

The foregoing descriptions of specific embodiments of the present invention have been presented for purposes of illustration and description. They are not intended to be exclusive or to limit the invention to the precise forms disclosed, and obviously many modifications and variations are possible in light of the above teaching. The embodiments were chosen and described in order to best explain the principles of the invention and its practical application, to thereby enable others skilled in the art to best utilize the invention and various embodiments with various modifications as suited to particular use contemplated. It is intended that the scope of the invention be defined by the claims appended hereto and their equivalents.

## Claims

1. A method of merging transport streams from a plurality of input ports into an output transport stream, wherein each of the plurality of input ports is assigned a port-identifier to identify a port on which the input transport streams is received, wherein each of the received transport streams comprises a plurality of packets, wherein each of the plurality of packets has a PID therein for identifying the type of the packet, the method **characterized by** comprising the steps of:
a. determining a tag for each packet of the received transport streams from the plurality of input ports according to the port-identifier and the PID of the packet, for uniquely identifying the packet in the output transport stream; and
b. outputting said each packet of the received transport streams to the output transport stream, wherein said each packet is embedded with a corresponding tag.

2. The method according to claim 1, wherein the tag is determined according to a mapping table comprising a mapping to map the PID and the port-identifier of the packet to the tag.

3. The method according to claim 2, wherein the tag is the same as the PID of the packet.

4. The method according to claim 2, wherein the tag is different from the PID of the packet.

5. The method according to claim 1, wherein the tag is embedded in the packet by replacing the PID of the packet with the tag.

6. The method according to claim 1, wherein the tag is embedded in the packet by replacing the CRC of the packet.

7. The method according to claim 1, wherein the tag is embedded in the packet by inserting the tag into the packet.

8. The method according to claim 1, wherein the tag is dynamically generated when the packet is received for the first time, and the tag is to be used for other packets having the same port-identifier and PID as the packet.

9. The method according to claim 8, wherein the tag is embedded by replacing the PID of the packet with the tag.

10. The method according to claim 8, wherein the tag is embedded by inserting the tag into the packet.

11. A method of merging transport streams from a plurality of input ports into an output transport stream, wherein each of the plurality of input ports is assigned a port-identifier to identify a port on which the input transport streams is received, wherein each of the received transport streams comprises a plurality of packets, wherein each of the plurality of packets of the received transport stream has a PID therein for identifying the type of the packet, the method **characterized by** comprising the steps of:
a. determining a tag for each packet of the received transport streams from the plurality of ports according to the port-identifier of the packet, for uniquely identifying the packet in the output transport stream; and
b. outputting said each packet of the received transport streams to the output transport stream, wherein said each packet is embedded with a corresponding tag, wherein the payload of the packet is not divided into two or more packets in the output transport stream.

12. The method according to claim 11, wherein the tag is equal to the port-identifier of the packet in step a.

13. The method according to claim 11, wherein the tag is embedded by one of the following ways: inserting the tag into the packet, inserting the tag into a newly added CRC of the packet, replacing the CRC of the packet with the tag and replacing the sync-byte of the packet with the tag.

14. An apparatus for merging transport streams from a plurality of input ports into an output transport stream via an output port, wherein each of the plurality of input ports is assigned a port-identifier to identify a port on which the input transport streams is received, wherein each of the received transport streams comprises a plurality of packets, wherein each of the plurality of packets of the received transport stream has a PID therein for identifying the type of the packet, the apparatus **characterized by** comprising:
a mapping module for determining a tag for each packet of the received transport streams from the plurality of input ports according to the port-identifier and the PID of the packet, for uniquely identifying the packet in the output transport stream; and
an outputting module to output said each packet of the received transport streams to the output transport stream via the output port, wherein said each packet is embedded with its corresponding tag.

15. A transport system, **characterized by** comprising:
a first apparatus recited as in claim 14; and
a second apparatus recited as in claim 14, wherein the output port of the first apparatus of the plurality of apparatus is electrically coupled to an input port of the second apparatus.
